# EUROPÄISCHE PATENTSCHRIFT

(11) **EP 1 892 394 B1**
(45) Veröffentlichungstag und Bekanntmachung des Hinweises auf die Patenterteilung: **13.05.2009**
(21) Anmeldenummer: 07013161.0
(22) Anmeldetag: 05.07.2007
(51) Int. Cl.: F01N 3/021, F01N 3/037, F01N 3/20

(54) **Abgasnachbehandlungssystem**
Exhaust gas aftertreatment system
Système de traitement postérieur de gaz d'échappement

(30) Priorität: 16.08.2006 DE 102006038290
(43) Veröffentlichungstag der Anmeldung: 27.02.2008
(73) Patentinhaber: MAN Nutzfahrzeuge AG, 80995 München (DE)
(72) Erfinder: Döring, Andreas, 80339 München (DE); Spaniol, Peter, 90513 Zirndorf (DE)

(56) Entgegenhaltungen:
- EP-A- 1 357 267
- WO-A-20/06029201
- US-A1- 2005 031 514

## Beschreibung

Gegenstand der Erfindung ist ein Abgasnachbehandlungssystem bei mit Luftüberschuss betriebenen Brennkraftmaschinen, wie Dieselmotoren und Benzinmotoren mit Direkteinspritzung.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert. Aus diesem Grund werden für Hochtemperaturanwendungen V₂O₅-freie Eisen- oder Kupferzeolithe eingesetzt.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

2 NO₂ + C ⇒ 2 NO+ CO₂ (4)

2 NO₂ + C ⇒ 2 NO + CO (5)

2 C + 2 NO₂ ⇒ N₂ + 2CO₂ (6)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können. Zudem kann es beim Einsatz von Partikelfiltern zu einer Verstopfung der Filter durch Ölasche kommen, so dass diese in bestimmten Intervallen ausgebaut und gereinigt werden müssen.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (7)

erfolgt zunächst die Thermolyse, d. h. die thermische Zersetzung von Harnstoff. Anschließend erfolgt nach

HNCO + H₂O ⇒ NH₃ + CO₂ (8)

Die Hydrolyse, also die katalytische Zersetzung von Isocyansäure (HNCO) in Ammoniak (NH₃) und Kohlendioxid (CO₂),

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß 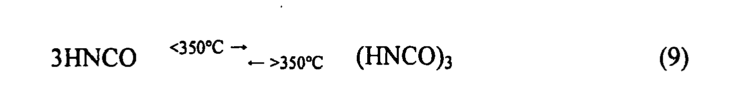 entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Gemäß der US 2005/0031514 A1 ist es bekannt, in einem Abgasstrang einen Oxidationskatalysator vorzusehen, dem ein Partikelfilter nachgeordnet ist. Der Partikelfilter ist zur Beseitigung der Stickoxide mit einem Material beschichtet, das eine selektive katalytische Reduktion der Stickoxide in Anwesenheit eines Reduktionsmittels, z.B. Ammoniak, bewirkt. Die Zuführung des Reduktionsmittels erfolgt stromab zum Oxidationskatalysator bzw. stromauf zum beschichteten Partikelfilter.

Weiterhin ist es aus der EP 1 357 267 A2 bekannt, den Abgasstrang in zwei Teilstränge aufzuteilen und in dem einen Teilstrang einen Oxidationskatalysator und in dem anderen Teilstrang einen Hydrolysekatalysator mit stromauf zu diesem angeordneter Harnstoffzuführungseinrichtung vorzusehen. Stromab zu Hydrolysekatalysator und Oxidationskatalysator werden die Teilströme wieder zusammengeführt, wobei stromab zur Zusammenführung ein Mischer und ein SCR-Katalysator angeordnet sind.

Eine weitere Anordnung aus in Reihe angeordnetem Oxidationskatalysator, Partikelfilter und SCR-Katalysator zeigt die WO 2006/029201.

Ausgehend vom vorstehend beschriebenen Stand der Technik ist es Aufgabe der Erfindung unter Vermeidung der Nachteile bekannter Anordnungen ein Abgasnachbehandlungssystem anzugeben, das sowohl die Partikelemission als auch die Stickoxidemission reduziert und das einerseits ohne spezielle Regenerationszyklen für den Partikelabscheider oder Partikelfilter auskommt und andererseits bei möglichst allen Betriebsbedingungen vom Reduktionsmittel ohne die Bildung problematischer Reaktionsprodukte NH₃ abspaltet.

Gelöst wir die Aufgabe durch ein Abgasnachbehandlungssystem zur Stickoxid- und Partikelreduzierung bei mit Luftüberschuss betriebenen Brennkraftmaschinen, gemäß dem Kennzeichen des Anspruches 1, vorteilhafte Weiterbildungen des Abgasnachbehandlungssystem sind in den abhängigen Ansprüchen gekennzeichnet.

Bei der Lösung der Aufgabe wurde davon ausgegangen, dass zur Erreichung der geforderten Abgasgrenzwerte die Stickoxidreduzierung durch einen SCR-Katalysators mit Hilfe von Ammoniak erfolgt und die Partikelreduktion mittels eines Partikelabscheiders oder eines Partikelfilters erfolgt. Das erfindungsgemäße Abgasnachbehandlungssystem sieht im Abgasstrom der Brennkraftmaschine ein Oxidationskatalysator vor, der zumindest einen Teil des im Abgasstrom enthaltenen Stickstoffmonoxids in Stickstoffdioxid überführt. Zur Vermeidung unerwünschter Reaktionsprodukte wie Cyanursäure wurde gefunden, dass ein Ammoniak abspaltendes Reaktionsmittel parallel zum Oxidationskatalysator in einen vor dem Oxidationskatalysator vom Abgasstrom abgezweigten und nach dem Oxidationskatalysator in den Abgasstrom rückgeführten Abgasteilstrom zugeführt werden muss, um von dem Reduktionsmittel stromab der Einspritzstelle durch das noch heiße Abgas Ammoniak (NH₃) abzuspalten, wobei stromauf zum Oxidationskatalysator wenigstens eine Turbine wenigstens eines Abgasturboladers angeordnet ist und der Abzweig des Abgasteilstroms in den das Reduktionsmittel zugeführt wird, stromauf zur Turbine des Abgasturboladers liegt. Die Zuführung des Reduktionsmittels erfolgt also motornah und noch vor dem Partikelabscheider oder Partikelfilter wodurch eine Abkühlung des Abgasstroms in vorteilhafter Wiese vermieden wird.

Alternativ zu dem Ammoniakabspaltenden Reduktionsmittel kann vor dem Partikelabscheider auch NH₃ zugeführt werden, das an anderer Stelle von einem Reduktionsmittel unter entsprechend günstigen Bedingungen abgespalten wurde.

Dadurch dass der Partikelabscheider oder Partikelfilter stromab zum Oxidationskatalysator im Abgasstrom angeordnet ist, gelingt es, die angelagerten Rußpartikel mit Hilfe des im Abgasstrom enthaltenen Stickstoffdioxids in Kohlenmonoxid, Kohlendioxid, Stickstoff und Stickstoffmonoxid kontinuierlich umzusetzen, so dass in vorteilhafter Weise auf eine spezielle zyklische Regenerierung des Partikelabscheider oder Partikelfilters verzichtet werden kann. Die Reduzierung der im Abgasstrom verbliebenen Stickoxide zu Stickstoff und Wasserdampf erfolgt vorteilhaft durch das stromab nachgeordnete SCR-System.

Zur Verbesserung der Umsetzung des Reduktionsmittels, insbesondere nach dem Start der Brennkraftmaschine und im Niedriglastbereich, ist es vorteilhaft, zwischen der Zuführstelle und dem Partikelabscheider oder Partikelfilter einen Hydrolysekatalysator anzuordnen. Dabei können Hydrolysekatalysator und Partikelabscheider oder Partikelfilter, die Baugröße vorteilhaft minimierend, in einem Bauteil vereint werden, indem der Partikelabscheider oder Partikelfilter zumindest teilweise mit einer den Hydrolysekatalysator bildenden Aktivkomponente beschichtet oder imprägniert ist.

Gleichfalls besteht die Möglichkeit, den Hydrolysekatalysator und den Oxidationskatalysator zu einem gemeinsamen Bauteil zusammenzufassen, derart, dass beide parallel zueinander in einem gemeinsamen Gehäuse angeordnet sind und das Reduktionsmittel in den Abgasteilstrom zugeführt wird, der nur den Hydrolysekatalysator durchströmt. Durch diese Maßnahme lässt sich ebenfalls die Baugröße vorteilhaft reduzieren.

Bei mittels Abgasturbolader aufgeladenen Brennkraftmaschinen kann es von Vorteil sein, den Abzweig des Abgasteilstroms, in den die Reduktionsflüssigkeit eingespritzt wird, stromauf zur Turbine des Abgasturboladers anzuordnen, um für die Abspaltung des Ammoniaks ein möglichst hohes Temperaturniveau zu schaffen. Handelt es sich um eine zweiflutig gespeiste Turbine, wobei die eine Flut von wenigstens einem ersten Zylinder und die andere Flut von wenigstens einem zweiten Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich angehoben wird.

Handelt es sich um eine Brennkraftmaschine mit zwei Abgasturboladern, wobei die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt wird, ist es vorteilhaft, wenn der Abgasteilstrom vor der Turbine eines der beiden Abgasturbolader vom Abgasstrom abzweigt. Die Zylinder der Zylinderbank, von deren Abgastrakt der Abgasteilstroms abzweigt, können dann mit anderen Motorparametern betrieben werden, als die Zylinder der anderen Zylinderbank. Auf diese Weise wird auch hier in eine vorteilhafte Optimierung der Verhältnisse im Abgasteilstrom hinsichtlich der Aufbereitung des Reduktionsmittels möglich, indem beispielsweise die Abgastemperatur in der Startphase oder in Niedriglastbereich angehoben wird.

Zur exakten Dosierung des Reduktionsmittels kann es weiter vorteilhaft sein, im Abgasteilstrom ein Drosselelement anzuordnen, das die Raumgeschwindigkeit des Abgases und/ oder die Abgasmenge im Abzweig steuert.

Um bei in Fahrzeuge eingebauten Brennkraftmaschinen im Schubbetrieb oder im Motorbremsbetrieb ein Zurückströmen des bereits mit Ammoniak beladenen Abgasteilstroms in Richtung Brennkraftmaschine zu vermeiden, ist es vorteilhaft, stromauf zur Zuführstelle ein Rückschlagventil anzuordnen und so die stromauf liegenden Komponenten vor dem aggressiven Ammoniak zu schützen. Alternativ oder zusätzlich kann der Einsatz eines steuerbaren, stromauf zur Zuführstelle im Abgasteilstrom angeordneten Absperrelementes, z. B. in Form einer Abgasklappe, vorteilhaft sein, das bzw. die den Abgasteilstrom im Bedarfsfall abriegelt. Eine derartige steuerbare Klappe könnte auch in vorteilhafter Weise als steuer- oder regelbares Drosselelement dienen und wäre über das ohnehin vorhandene Motorsteuergerät ansteuerbar.

Weiterhin kann es vorteilhaft sein, stromab zum SCR-Katalysator einen Katalysator zum Oxidieren von Ammoniak anzuordnen, um einen Ammoniakschlupf zu vermeiden.

Für den Katalysator zur Oxidation von NO zu NO₂ sowie für den Katalysator zur Oxidation von Ammoniak lassen sich Platin und/oder Palladium und/oder Iridium und/oder deren Oxide und/oder IrTiOx und/oder Zeolithe als Aktivmaterial vorteilhaft einsetzen. Die SCR-Katalysatoren zur Reduktion von Stickoxiden mit Hilfe von Ammoniak können als Aktivkomponente vorteilhaft Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten. Als Aktivkomponenten für den Hydrolysekatalysator zur Freisetzung von Ammniak kommen Titandioxid und/oder Siliziumdioxid und/oder Aluminiumoxid und/oder Zeolithe in Frage.

Bei den vorstehend angesprochenen Katalysatoren kann es sich um Vollkatalysatoren und/oder Beschichtungskatalysatoren handeln, die Aktivkomponenten der Katalysatoren können auf keramische und/oder metallische und/oder silikathaltige und/oder quarzhaltige Träger aufgebracht sein.

Nachdem die Abgastemperatur am Partikelabscheider bzw. Partikelfilter ebenso wie der Gehalt an Stickstoffdioxid am Partikelabscheider bzw. Partikelfilter die Wirksamkeit des Abgasnachbehandlungssystems wesentlich mit beeinflusst, kann es von Vorteil sein, durch variieren der Motoreinstellung mittels der ohnehin vorhandenen Motorsteuereinrichtung, die Abgastemperatur bzw. den Gehalt an Stickstoffdioxid zu verändern. Insbesondere können, durch Veränderung der Motorparameter oder durch zuführen von Kohlenwasserstoffen in den Abgasstrom vor dem Oxidationskatalysator zur Oxidation von Stickstoffmonoxid (und/ oder von Kohlenwasserstoff und/ oder von Kohlenmonoxid), die Abgastemperatur und der Stickstoffdioxidgehalt angehoben werden.

Weiter ist es vorteilhaft, mehrere der im Abgasnachbehandlungssystem enthaltenen Katalysatoren im einem Gehäuse zusammenzufassen, um die Kosten für das System und insbesondere den Platzbedarf für den Einbau in z. B. Nutzfahrzeuge zu minimieren. Partikelabscheider bzw. Partikelfilter sollten vorteilhaft so verbaut sein, dass sie auswechselbar sind.

Nachfolgend wird die Erfindung mit Hilfe der Zeichnungen anhand einiger Beispiele näher erläutert, es zeigen:
- Fig. 1: Ein erstes Abgasnachbehandlungssystem mit Teilstromhydrolyse
- Fig. 2: Ein Abgasnachbehandlungssystem mit Hauptstromhydrolyse
- Fig. 3: Ein zweites Abgasnachbehandlungssystem mit Teilstromhydrolyse
- Fig. 4: Ein erfindungsgemäßes Abgasnachbehandlungssystem für Brennkraftmaschinen mit Turbolader

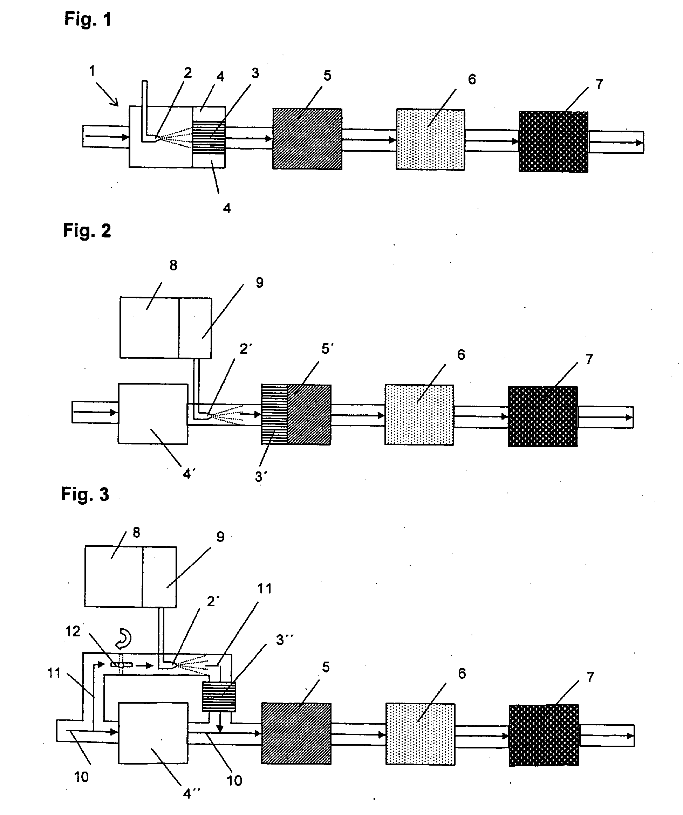

Eine Anordnung zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann. Parallel zum Hydrolysekatalysator 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Reduktion der Feststoffpartikel und andererseits bei der nachgeordneten SCR-Reaktion, wie dies nachfolgend noch näher beschrieben ist.

Stromab zum Hydrolysekatalysator 3 und dem parallel zu diesem angeordneten Oxidationskatalysator 4 ist ein Partikelabscheider angeordnet, der die im Abgas befindliche Rußpatikel anlagert. Die so im Partikelabscheider 5 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelabscheider 5 entfallen.

Die eigentliche selektive katalytische Reduktion der Stickoxide erfolgt in stromab zum Partikelabscheider gelegenen SCR-Katalysator, der einen möglichst großen Anteil der im Abgas vorhandenen Stickoxide (NO_{X}) bei gleichzeitiger hoher Selektivität der Reduktion in Stickstoff und Wasserdampf überführen soll, ohne dass überschüssiger Ammoniak (NH₃) im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene NO, es ist demnach wünschenswert, den Oxidationskatalysator so auszulegen, dass ein möglichst hoher Anteil an Stickstoffmonoxid in Stickstoffdioxid übergeführt wird, also nach Möglichkeit mehr als zur Umsetzung der Rußpartikel im Partikelabscheider nötig ist. Durch die stark exotherme Rußoxidation kann es zu einem deutlichen Temperaturanstieg kommen, so dass stromab des Partikelabscheiders durchaus Temperaturen oberhalb von 650°C, die zu einer Schädigung V₂O₅-haltiger SCR-Katatalysatoren führen, auftreten können. Aus diesem Grund kann der Einsatz von V₂O₅-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann wenn ein geringfügiger Ammoniak-überschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 7 nachgeordnet, mit dem das überschüssige NH₃ in Stickstoff und Wasserdampf übergeführt wird. Diese Oxidationsreaktion sollte möglichst selektiv ablaufen, so dass zumindest Anteile von Iridium oder Iridiumoxid als Aktivmaterial für den NH₃-Oxidationskatalysator 7 verwendet werden sollten. Wird dagegen ein hoher Umsatz bei geringer Selektivität angestrebt, kommen als Aktivmaterialien Platin und/oder Palladium und/oder deren Oxide in Frage.

Wie bereits weiter oben angedeutet, kann dann, wenn das Temperaturniveau an der Zuführstelle für das Reduktionsmittel über den gesamten Betriebsbereich hoch ist, auf den Hydrolysekatalysator 3 verzichtet werden. Weiter kann abweichend zum Beispiel nach Figur 1 an Stelle des Partikelabscheiders ein Partikelfilter eingesetzt werden, der Unterschied zwischen Partikelabscheider und Partikelfilter wurde bereits ausgeführt. Die Austauschbarkeit von Partikelabscheider und Partikelfilter gilt auch für die nachfolgend beschriebenen Beispiele ohne dass darauf nochmals explizit hingewiesen wird.

Eine gegenüber dem Beispiel nach Figur 1 vereinfachte Ausführungsform zeigt das Beispiel nach Fig. 2. Hier wurde auf eine Parallelführung des Abgasstroms, der auch in diesem Beispiel durch Pfeile angedeutet ist, verzichtet, so dass sich an einen im Abgasstrom angeordneten Oxidationskatalysator 4', der einen Teil des im Abgasstrom enthaltenen Stickstoffmonoxid in Stickstoffdioxid überführt, stromab die Zuführstelle für das Reduktionsmittel anschließt. Die Zuführung des Reduktionsmittels, in diesem Beispiel wässrige Harnstofflösung (AdBlue) erfolgt durch eine in Abhängigkeit von Betriebsparametern der Brennkraftmaschine gesteuerte Zumesseinrichtung 9, die die wässrige Harnstofflösung aus einem Vorratsbehälter entnimmt und über eine Düse 2', je nach Betriebszustand der Brennkraftmaschine, in vorgegebenen Mengen in den Abgasstrom einspritzt. Stromab zur Zuführstelle ist ein Partikelfilter 5' im Abgasstrom angeordnet dessen stromauf gelegener Teil mit einer die Hydrolyse des Reduktionsmittel fördernden Aktivkomponente beschichtet ist. Dafür in Frage kommende Aktivkomponenten sind bereits in Verbindung mit Figur 1 aufgeführt. Neben der Hydrolyse des Reduktionsmittels werden im Partikellabscheider mittels des im Oxidationskatalysator 4' gebildeten Stickstoffdioxids die angelagerten Rußpartikel wie bereits beschrieben in Kohlenmonoxid, Kohlendioxid, Stickstoff und Stickstoffmonoxid kontinuierlich umgesetzt. Die Reduktion der Stickoxide erfolgt im stromab zum Partikelabscheider angeordneten SCR-Katalysator 6, dem ein NH₃-Oxidationskatalysator 7 nachgeordnet ist. Die Funktion des SCR-Katalysators 6 und des NH₃-Oxidationskatalysator 7 ist identisch mit der im Beispiel nach Figur 1 beschriebenen, so dass sich weitere Ausführungen hierzu erübrigen, es wird auf die angesprochene Passage in der Beschreibung verwiesen.

Ein weiteres Ausführungsbeispiel für das erfindungsgemäße Abgasnachbehandlungssystem ist in Fig. 3 gezeigt. Nachdem sich dieses Beispiel von dem Beispiel nach Figur 1 nur in der Aufbereitung des Reduktionsmittels unterscheidet, werden nachfolgend nur die abweichenden Teile beschrieben, hinsichtlich der zum Beispiel nach Figur 1 gleichen Teile wird auf die einschlägigen Beschreibungsteile um Beispiel nach Figur 1 verwiesen.

Stromauf zu einem im Abgashauptstrom 10 befindlichen Oxidationskatalysator 4', der Stickstoffmonoxid zu Stickstoffdioxid oxidiert, zweigt vom Abgashauptstrom 10 ein Abgasteilstrom 11 ab, der über ein mittels einer Motorsteuereinrichtung (nicht dargestellt) in Abhängigkeit von Betriebsparametern der Brennkraftmaschine steuerbares Absperrorgan 12 geführt ist. Aufgabe des Absperrorgans 12 ist es, einerseits Massenstrom und Abgasmenge im Abgasteilstrom 11 in Abhängigkeit vom Betriebspunkt der Brennkraftmaschine zu steuern und andererseits bei bestimmten Betriebsbedingungen, z. B. im Motorbremsbetrieb einer in ein Nutzfahrzeug eingebauten Brennkraftmaschine den Rückstrom von mit Ammoniak beladenen Abgasen in Richtung Motor zu unterbinden. Stromab zum Absperrorgan 12 ist eine Zumesseinrichtung für das Reduktionsmittel angeordnet, die mit der zur Figur 2 beschriebenen identisch ist. Um Wiederholungen zu vermeiden wird auf die entsprechenden Passagen der Beschreibung zu Figur 2 verwiesen.

Stromab zur Zuführstelle für das Reduktionsmittel ist wiederum ein Hydrolysekatalysator 3" angeordnet, der die Abspaltung von Ammoniak vom Reduktionsmittel auch bei ungünstigen Temperaturverhältnissen sicherstellt. Der Abgasteilstrom 11 mündet stromab des Oxidationskatalysators 4' wieder in den Abgashauptstrom 10 und wird zusammen mit diesem dem Partikelabscheider, dem SCR-Katalysator und dem NH₃-Oxidationskatalysator zugeführt, deren Funktion bereits in Verbindung mit Figur 1 ausführlich erläutert wurde. Es wird hierzu auf die Beschreibung zu Figur 1 verwiesen.

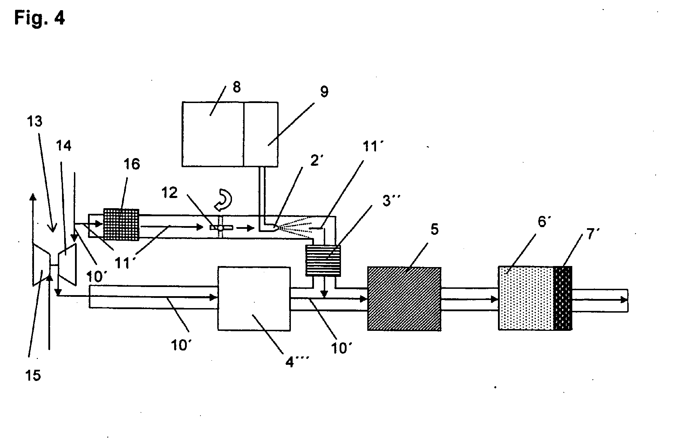

Bei heute in Nutzfahrzeugen betriebenen Brennkraftmaschinen ist üblicherweise eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage für die Hydrolyse des Reduktionsmittel ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 4. Wie dort gezeigt, verzweigt der von der Brennkraftmaschine (nicht dargestellt) kommende Abgasstrom bereits vor der Turbine 14 des Abgasturboladers 13 in einen Abgashauptstrom 10', der über die Turbine 14 geführt ist und über diese den Verdichter 15 antreibt und einen Abgasteilstrom 11 '. Der Abgasteilstrom 11' ist über einen Oxidationskatalysator 16 geführt, der einerseits in der normalen durch die Pfeile angedeuteten Strömungsrichtung des Abgases Stickstoffmonoxid in Stickstoffdioxid umsetzt und andererseits z. B. im Motorbremsbetrieb eventuell mit dem Abgasstrom in Richtung Brennkraftmaschine zurückströmenden Ammoniak bzw. zurückströmendes noch nicht umgesetztes Reduktionsmittel oxidiert. Stromab zum Oxidationskatalysator 16 schließt sich im Abgasteilstrom 11'ein Absperrorgan 12 an, das in Aufbau und Funktion dem in Verbindung mit Figur 3 beschriebenen Absperrorgan entspricht, es wird hierzu auf die einschlägigen Teile der Beschreibung zur Figur 3 verwiesen. Stromab zum Absperrorgan wird mit einer Zumesseinrichtung wie sie bereits zu Figur 2 beschrieben ist, das Reduktionsmittel in den Abgasnebenstrom 11' zugeführt, das durch die im Abgasnebenstrom herrschende relativ hohe Abgastemperatur und den der Zuführstelle nachgeordneten Hydrolysekatalysator, ohne den Anfall problematischer Reaktionsprodukte wie Cyanursäure, Ammoniak abspaltet. Parallel zu dem Abgasnebenstrom 11' wird der Abgashauptstrom 10' über einen Oxidationskatalysator 4"' geführt, der wiederum im Abgas enthaltenes Stickstoffmonoxid zu Stickstoffdioxid oxidiert. Stromab zum Oxidationskatalysator 4'" im Abgashauptstrom 10' und dem Hydrolysekatalysator 3 " im Abgasnebenstrom 11' vereinen sich die parallel geführten Abgasströme wieder und durchströmen den stromab gelegenen Partikelabscheider 5, wo, wie bereits zu den anderen Ausführungsbeispielen ausgeführt, die im Partikelabscheider 5 angelagerten Rußpartikel mit Hilfe des in den Oxidationskatalysatoren 4'" und 16 erzeugten Stickstoffdioxids zu Kohlenmonoxid, Kohlendioxid, Stickstoff und Stickstoffmonoxid kontinuierlich umgesetzt werden. Dem Partikelabscheider ist ein SCR-Katalysator 6' nachgeordnet, der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 6'in seinem stromab gelegenen Bereich mit einem einen NH₃-Oxidationskatalysator 7' ausbildenden Aktivmaterial beschichtet.

Handelt es sich bei der Turbine 14 in Abweichung zum Beispiel nach Figur 4 um eine zweiflutig gespeiste Turbine, wobei die eine Flut von einer ersten Anzahl von Zylinder und die andere Flut von einer zweiten Anzahl von Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern (z.B. Kraftstoffeinspritzzeiten- oder mengen) betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder im Niedriglastbereich, z. B. durch eine Nacheinspritzung im Expansions-oder Ausschubtakt, angehoben wird.

Bei Brennkraftmaschinen mit zwei Zylinderbänken, die üblicherweise für jede der Zylinderbänke einen eigenen Abgasturbolader aufweisen, so dass die Turbine des einen Abgasturboladers von der einen Zylinderbank der Brennkraftmaschine und die Turbine des anderen Abgasturboladers von der anderen Zylinderbank der Brennkraftmaschine mit Abgas beschickt wird, ist es vorteilhaft, den Abgasteilstrom vor der Turbine eines der beiden Abgasturbolader vom Abgasstrom abzuzweigen. Die Zylinder der Zylinderbank von deren Abgastrakt der Abgasteilstroms abzweigt, können dann mit anderen Motorparametern (z.B. Kraftstoffeinspritzzeiten- oder mengen) betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich, z. B. durch eine Nacheinspritzung im Expansions-oder Ausschubtakt, angehoben wird.

Hinsichtlich der in den vorstehenden Beispielen angesprochenen Katalysatoren ist anzumerken, das es sich um Vollkatalysatoren und/oder Beschichtungskatalysatoren handeln, die Aktivkomponenten der Katalysatoren können auf keramische und/oder metallische und/oder silikathaltige und/oder quarzhaltige Träger aufgebracht sein. Herstellbar sind derartige Katalysatoren mit Hilfe vieler bekannter Herstellverfahren, es wird hierzu ausdrücklich auf die einschlägige Fachliteratur verwiesen.

Für die in den vorstehenden Beispielen angesprochenen Oxidationskatalysatoren lassen sich Platin und/oder Palladium und/oder Iridium und/oder deren Oxide und/oder IrTiOx und/oder Zeolithe als Aktivmaterialien einsetzen. Als Aktivkomponenten für die SCR-Katalysatoren zur Reduktion von Stickoxiden mit Hilfe von Ammoniak kommen Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz. Für den Hydrolysekatalysator zur Verbesserung der Freisetzung von Ammoniak können als Aktivkomponenten Titandioxid und/oder Siliziumdioxid und/oder Aluminiumoxid und/oder Zeolithe zur Anwendung kommen.

Zudem kann es sinnvoll sein, mehrere Katalysatoren und/oder Partikelabscheider in einem gemeinsamen Gehäuse unterzubringen, um Bauraum einzusparen und Kosten zu verringern.

Da es beim Einsatz von Partikelfiltern zu einer Verstopfung der Filter durch Ölasche kommen kann, ist es sinnvoll, die Filter so zu verbauen, dass diese auswechselbar und damit leicht zu reinigen sind.

Um das Abgasnachbehandlungssystem in seinem optimalen Betriebsbereich zu betreiben, kann die Abgastemperatur und/oder der Gehalt an Stickstoffdioxid an den Vorrichtungen zur Abscheidung von Partikeln durch Verstellen von Motorparametern und/oder durch Anheben der Kohlenwasserstoffkonzentration mit Hilfe einer Verstellung von Motorparametern und/oder durch Zuführung von Kohlenwasserstoffen in den Abgasstrom stromauf der Katalysatoren zur Oxidation von Stickstoffmonoxid und/oder Kohlenwasserstoffen und/oder Kohlenmonoxid verändert werden.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Abgasnachbehandlungssystem zur Stickoxid- und Partikelreduzierung bei mit Luftüberschuss betriebenen Brennkraftmaschinen, wobei die Stickoxidreduzierung mittels eines SCR-Katalysators (6, 6') und die Partikelreduktion mittels eines Partikelabscheiders (5, 5') oder eines Partikelfilters erfolgt, wobei
- im Abgasstrom der Brennkraftmaschine ein Oxidationskatalysator (4, 4', 4'', 4''', 16) angeordnet ist, der zumindest einen Teil des im Abgasstrom enthaltenen Stickstoffmonoxids in Stickstoffdioxid überführt,
- ein Vorratsbehälter (8) für ein Reduktionsmittel und eine Zumesseinrichtung (9) für das Reduktionsmittel vorgesehen sind, wobei die Zumesseinrichtung (9) das Reduktionsmittel parallel zum Oxidationskatalysator (4, 4", 4''') in einen vor dem Oxidationskatalysator (4, 4'', 4''') vom Abgasstrom abgezweigten und nach dem Oxidationskatalysator (4, 4", 4''') in den Abgasstrom rückgeführten Abgasteilstrom zugibt,
- stromauf zum Oxidationskatalysator (4''') wenigstens eine Turbine (14) wenigstens eines Abgasturboladers (13) angeordnet ist und der Abzweig des Abgasteilstroms in den das Reduktionsmittel zugeführt wird, stromaufzur Turbine (14) des Abgasturboladers (13) liegt,
- das Reduktionsmittel ein stromab der Zuführstelle durch das heiße Abgas Ammoniak abspaltender Stoff ist,
- stromab zum Oxidationskatalysator (4, 4', 4'', 4''', 16) und stromab zur Zuführstelle des Reduktionsmittels der Partikelabscheider (5, 5') oder Partikelfilter im Abgasstrom angeordnet ist, der die im Partikelabscheider (5, 5') oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt,
- stromab zum Partikelabscheider (5, 5') oder Partikelfilter der SCR-Katalysator (6, 6') angeordnet ist, der die im Abgasstrom enthaltenen Stickoxide mit Hilfe des abgespaltenen Ammoniaks im Wege der selektiven katalytischen Reduktion zu Stickstoff und Wasserdampf reduziert.

2. Abgasnachbehandlungssystem nach Anspruch 1, **dadurch gekennzeichnet, dass** zwischen der Zuführstelle für das Reduktionsmittel und dem Partikelabscheider (5, 5') oder Partikelfilter ein Hydrolysekatalysator (3, 3', 3'') zur Verbesserung der Freisetzung von Ammoniak angeordnet ist.

3. Abgasnachbehandlungssystem nach 2, **dadurch gekennzeichnet, dass** Hydrolysekatalysator (3') und Partikelabscheider (5') oder Partikelfilter in einem Bauteil vereint sind, derart, dass der Partikelabscheider (5') oder Partikelfilter wenigstens teilweise mit einer den Hydrolysekatalysator (3') bildenden Aktivkomponente beschichtet oder imprägniert ist.

4. Abgasnachbehandlungssystem nach einem der Ansprüche 1 oder 2, **dadurch gekennzeichnet, dass** der Hydrolysekatalysator (3) und der Oxidationskatalysator (4) ein gemeinsames Bauteil bilden, derart dass beide parallel zueinander in einem gemeinsamen Gehäuse angeordnet sind, so dass der Abgasteilstromes nur den Hydrolysekatalysator (3) und der Abgasstromes nur den Oxidationskatalysator (4) durchströmt, und das Reduktionsmittel in den Abgasteilstrom zugegeben wird, der nur den Hydrolysekatalysator (3) durchströmt.

5. Abgasnachbehandlungssystem nach Anspruch 4, **dadurch gekenntzeichnet, dass** die Turbine zweiflutig gespeist wird, wobei die eine Flut von wenigstens einem ersten Zylinder und die andere Flut von wenigstens einem zweiten Zylinder mit Abgas beschickt wird und der Abgasteilstroms von einer der beiden Fluten abgezweigt.

6. Abgasnachbehandlungssystem nach Anspruch 5, **dadurch gekennzeichnet, dass** die Zylinder der Flut von der der Abgasteilstrom abzweigt mit anderen Motorparametern betriebbar sind als die Zylinder der anderen Flut.

7. Abgasnachbehandlungssystem nach Anspruch 6, **dadurch gekennzeichnet, dass** zwei Abgasturbolader vorhanden sind und dass die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt werden und der Abgasteilstrom vor der Turbine eines der beiden Abgasturbolader vom Abgasstrom abzweigt.

8. Abgasnachbehandlungssystem nach Anspruch 7, **dadurch gekennzeichnet, dass** die Zylinderbank von deren Abgastrakt der Abgasteilstrom abzweigt mit anderen Motorparametern, betreibbar ist als die andere Zylinderbank.

9. Abgasnachbehandlungssystem nach einem der vorhergehenden Ansprüche, **dadurch gekennzeichnet, dass** im Abgasteilstrom ein Drosselelement angeordnet ist, mit dem die Raumgeschwindigkeit des Abgases und/ oder die Abgasmenge im Abzweig steuer- oder regelbar ist.

10. Abgasnachbehandlungssystem nach einem der vorhergehenden Ansprüche, **dadurch gekennzeichnet, dass** im Abgasteilstrom, stromauf zur Zuführstelle für das Reduktionsmittel, ein Rückschlagventil angeordnet ist.

11. Abgasnachbehandlungssystem nach einem der vorhergehenden Ansprüche, **dadurch gekennzeichnet, dass** im Abgasteilstrom, stromauf zur Zuführstelle für das Reduktionsmittel, ein steuer- oder regelbares Absperrelement (12) angeordnet ist.

12. Abgasnachbehandlungssystem nach einem der vorhergehenden Ansprüche, **dadurch gekennzeichnet, dass** stromab zum SCR-Katalysator (6, 6') ein NH₃-Oxidationskatalysator (7, 7') angeordnet ist.

13. Abgasnachbehandlungssystem nach einem der vorhergehenden Ansprüche, **dadurch gekennzeichnet, dass** als Aktivkomponente für den Oxidationskatalysator (4, 4', 4", 4''', 16) zur Umwandlung von Stickstoffmonoxid in Stickstoffdioxid und/ oder für den NH₃-Oxidationskatalysator (7, 7') zur Oxidation von Ammoniak Platin und/oder Palladium und/oder Iridium und/oder deren Oxide und/oder IrTiOₓ und/oder Zeolithe eingesetzt werden.

14. Abgasnachbehandlungssystem nach einem der vorhergehenden Ansprüche, **dadurch gekennzeichnet, dass** der SCR-Katalysator (6, 6') zur Reduktion von Stickoxiden mit Hilfe von Ammoniak als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten.

15. Abgasnachbehandlungssystem nach einem der Ansprüche 2, bis 14 **dadurch gekennzeichnet, dass** der Hydrolysekatalysator (3, 3', 3'') zur Freisetzung von Ammoniak als Aktivkomponenten Titandioxid und/oder Siliziumdioxid und/oder Aluminiumoxid und/oder Zeolithe enthält.

16. Abgasnachbehandlungssystem nach einem der vorhergehenden Ansprüche, **dadurch gekennzeichnet, dass** die Abgastemperatur und/oder der Gehalt an Stickstoffdioxid am Partikelabscheider (5, 5') oder Partikelfilter durch Verstellen von Motorparametern und/oder durch Anheben der Kohlenwasserstoffkonzentration mit Hilfe einer Verstellung von Motorparametern und/oder durch Zuführung von Kohlenwasserstoffen in den Abgasstrom stromauf des Oxidationskatalysator (4, 4', 4'', 4''', 16) zur Oxidation von Stickstoffmonoxid verändert wird.

17. Abgasnachbehandlungssystem nach einem der vorhergehenden Ansprüche, **dadurch gekennzeichnet, dass** mehrere Katalysatoren und/oder Partikelabscheider in einem gemeinsamen Gehäuse untergebracht sind.

18. Abgasnachbehandlungssystem nach einem der vorhergehenden Ansprüche, **dadurch gekennzeichnet, dass** die Partikelfilter und/oder Partikelabscheider so verbaut sind, dass sie auswechelbar sind.

## Claims

1. An exhaust aftertreatment system for reducing nitrogen oxides and particles in internal combustion engines operated with an excess of air, the nitrogen oxide reduction taking place by means of an SCR catalyst (6, 6') and the particle reduction by means of a particle separator (5, 5') or a particle filter, wherein
- an oxidation catalyst (4, 4', 4", 4''', 16) which converts at least part of the nitrogen monoxide contained in the exhaust stream into nitrogen dioxide is arranged in the exhaust stream of the internal combustion engine,
- a storage container (8) for a reducing agent and an admetering means (9) for the reducing agent are provided, the admetering means (9) adding the reducing agent in parallel to the oxidation catalyst (4, 4", 4''') to a partial exhaust stream which is branched off from the exhaust stream before the oxidation catalyst (4, 4", 4"') and returned to the exhaust stream after the oxidation catalyst (4, 4", 4'''),
- at least one turbine (14) of at least one exhaust turbocharger (13) is arranged upstream of the oxidation catalyst (4''') and the branch-off of the partial exhaust stream to which the reducing agent is supplied lies upstream of the turbine (14) of the exhaust turbocharger (13),
- the reducing agent is a substance which splits off ammonia downstream of the supply point due to the hot exhaust,
- in the exhaust stream downstream of the oxidation catalyst (4, 4', 4", 4''', 16) and downstream of the supply point for the reducing agent there is arranged the particle separator (5, 5') or particle filter, which converts the soot particles collected in the particle separator (5, 5') or particle filter with the aid of the nitrogen dioxide contained in the exhaust stream into carbon monoxide, carbon dioxide, nitrogen and nitrogen monoxide,
- the SCR catalyst (6, 6') is arranged downstream of the particle separator (5, 5') or particle filter, which catalyst reduces the nitrogen oxides contained in the exhaust stream to nitrogen and water vapour with the aid of the split-off ammonia by way of selective catalytic reduction.

2. An exhaust aftertreatment system according to Claim 1, **characterised in that** a hydrolysis catalyst (3, 3', 3") for improving the release of ammonia is arranged between the supply point for the reducing agent and the particle separator (5, 5') or particle filter.

3. An exhaust aftertreatment system according to Claim 2, **characterised in that** the hydrolysis catalyst (3') and particle separator (5') or particle filter are combined in one component, such that the particle separator (5') or particle filter is at least partially coated or impregnated with an active constituent forming the hydrolysis catalyst (3').

4. An exhaust aftertreatment system according to one of Claims 1 or 2, **characterised in that** the hydrolysis catalyst (3) and the oxidation catalyst (4) form a common component, such that both are arranged parallel to one another in a common housing, so that the partial exhaust stream flows through only the hydrolysis catalyst (3) and the exhaust stream flows through only the oxidation catalyst (4), and the reducing agent is added to the partial exhaust stream which flows through only the hydrolysis catalyst (3).

5. An exhaust aftertreatment system according to Claim 4, **characterised in that** the turbine is a two-scroll one, one scroll being charged with exhaust by at least one first cylinder and the other scroll by at least one second cylinder and the partial exhaust stream is branched off from one of the two scrolls.

6. An exhaust aftertreatment system according to Claim 5, **characterised in that** the cylinders of the scroll from which the partial exhaust stream branches off can be operated with different engine parameters from the cylinders of the other scroll.

7. An exhaust aftertreatment system according to Claim 6, **characterised in that** two exhaust turbochargers are present and that the turbine of one exhaust turbocharger is charged with exhaust from a first cylinder bank of the internal combustion engine and the turbine of the other exhaust turbocharger from a second cylinder bank of the internal combustion engine and the partial exhaust stream branches off from the exhaust stream before the turbine of one of the two exhaust turbochargers.

8. An exhaust aftertreatment system according to Claim 7, **characterised in that** the cylinder bank from the exhaust system of which the partial exhaust stream branches off can be operated with different engine parameters from the other cylinder bank.

9. An exhaust aftertreatment system according to one of the preceding claims, **characterised in that** a throttle element is arranged in the partial exhaust stream, with which element the space velocity of the exhaust and/or the amount of exhaust in the branch-off can be under open-loop or closed-loop control.

10. An exhaust aftertreatment system according to one of the preceding claims, **characterised in that** a non-return valve is arranged in the partial exhaust stream, upstream of the supply point for the reducing agent.

11. An exhaust aftertreatment system according to one of the preceding claims, **characterised in that** a shut-off element (12) which can be under open-loop or closed-loop control is arranged in the partial exhaust stream, upstream of the supply point for the reducing agent.

12. An exhaust aftertreatment system according to one of the preceding claims, **characterised in that** an NH₃ oxidation catalyst (7, 7') is arranged downstream of the SCR catalyst (6, 6').

13. An exhaust aftertreatment system according to one of the preceding claims, **characterised in that** platinum and/or palladium and/or iridium and/or their oxides and/or IrTiO_{X} and/or zeolites are used as active constituent for the oxidation catalyst (4, 4', 4", 4"', 16) for converting nitrogen monoxide into nitrogen dioxide and/or for the NH₃ oxidation catalyst (7, 7') for the oxidation of ammonia.

14. An exhaust aftertreatment system according to one of the preceding claims, **characterised in that** the SCR catalyst (6, 6') for the reduction of nitrogen oxides with the aid of ammonia contains vanadium and/or vanadium pentoxide and/or titanium dioxide and/or tungsten oxide and/or copper-containing zeolites and/or iron-containing zeolites and/or cobalt-containing zeolites as active constituent.

15. An exhaust aftertreatment system according to one of Claims 2 to 14, **characterised in that** the hydrolysis catalyst (3, 3', 3 ") for releasing ammonia contains titanium dioxide and/or silicon dioxide and/or aluminium oxide and/or zeolites as active constituents.

16. An exhaust aftertreatment system according to one of the preceding claims, **characterised in that** the exhaust temperature and/or the content of nitrogen dioxide at the particle separator (5, 5') or particle filter is changed by adjusting engine parameters and/or by raising the hydrocarbon concentration with the aid of an adjustment of engine parameters and/or by supplying hydrocarbons into the exhaust stream upstream of the oxidation catalyst (4, 4', 4", 4"', 16) for the oxidation of nitrogen monoxide.

17. An exhaust aftertreatment system according to one of the preceding claims, **characterised in that** a plurality of catalysts and/or particle separators are housed in a common housing.

18. An exhaust aftertreatment system according to one of the preceding claims, **characterised in that** the particle filters and/or particle separators are installed such that they are exchangeable.

## Revendications

1. Système de post-traitement des gaz d'échappement pour réduire les oxydes d'azote et les particules dans les moteurs à combustion interne fonctionnant avec un excédant d'air, selon lequel,
on réduit les oxydes d'azote à l'aide d'un catalyseur SCR (6, 6'), et
on réduit les particules à l'aide d'un séparateur de particules (5, 5') ou d'un filtre à particules,
procédé dans lequel,
- un catalyseur d'oxydation (4, 4', 4", 4"', 16) est installé dans la veine des gaz d'échappement du moteur à combustion interne, ce catalyseur transforme au moins une partie du monoxyde d'azote contenu dans la veine des gaz d'échappement en dioxyde d'azote,
- un réservoir (8) d'agent réducteur et son installation de dosage (9) sont prévus, l'installation de dosage (9) fournissant l'agent réducteur en parallèle au catalyseur d'oxydation (4, 4", 4''') dans une veine partielle de gaz d'échappement, dérivée en amont du catalyseur d'oxydation (4, 4", 4''') de la veine des gaz d'échappement et retournée dans la veine des gaz d'échappement en aval du catalyseur d'oxydation (4, 4", 4'''),
- en amont du catalyseur d'oxydation (4'''), il est prévu au moins une turbine (14) d'au moins un turbocompresseur de gaz d'échappement (13), et la dérivation de la veine partielle de gaz d'échappement qui reçoit l'agent réducteur se trouve en amont de la turbine (14) du turbocompresseur de gaz d'échappement (13),
- l'agent réducteur est une matière qui dégage de l'ammoniac sous l'effet des gaz d'échappement chauds en aval du point d'introduction,
- en aval du catalyseur d'oxydation (4, 4', 4", 4"', 16) et en aval du point d'introduction de l'agent réducteur, le séparateur de particules (5, 5') ou filtre à particules dans la veine des gaz d'échappement transforme les particules de noir de fumée stockées dans le séparateur de particules (5, 5') ou le filtre à particules, à l'aide du dioxyde d'azote contenu dans la veine des gaz d'échappement pour donner du monoxyde de carbone, du dioxyde de carbone, de l'azote et du monoxyde d'azote,
- en aval du séparateur de particules (5, 5') ou filtre à particules, se trouve le catalyseur SCR (6, 6') qui réduit les oxydes d'azote contenus dans la veine des gaz d'échappement à l'aide de l'ammoniac séparé au cours de la réduction catalytique sélective pour donner de l'azote et de la vapeur d'eau.

2. Système de post-traitement des gaz d'échappement selon la revendication 1,
**caractérisé par**
un catalyseur d'hydrolyse (3, 3', 3") pour améliorer le dégagement d'ammoniac, entre le point d'introduction de l'agent réducteur et le séparateur de particules (5, 5') ou filtre à particules.

3. Système de post-traitement des gaz d'échappement selon la revendication 2,
**caractérisé en ce que**
le catalyseur d'hydrolyse (3') et le séparateur de particules (5') ou le filtre à particules, sont réunis en un composant de façon que le séparateur de particules (5') ou le filtre à particules soit revêtu ou imprégné au moins en partie d'un composant actif formant le catalyseur d'hydrolyse (3').

4. Système de post-traitement des gaz d'échappement selon la revendication 1 ou 2,
**caractérisé en ce que**
le catalyseur d'hydrolyse (3) et le catalyseur d'oxydation (4) constituent un composant commun de façon à être installés tous deux en parallèle dans un boîtier unique de façon que la veine partielle des gaz d'échappement ne traverse que le catalyseur d'hydrolyse (3) et que la veine des gaz d'échappement ne traverse que le catalyseur d'oxydation (4), et l'agent réducteur est ajouté à la veine partielle des gaz d'échappement qui ne traverse que le catalyseur d'hydrolyse (3).

5. Système de post-traitement des gaz d'échappement selon la revendication 4,
**caractérisé en ce que**
la turbine est alimentée par deux flux, un premier flux venant au moins d'un premier cylindre et l'autre flux d'au moins un second cylindre donnant des gaz d'échappement et la veine partielle des gaz d'échappement est dérivée de l'un des deux flux.

6. Système de post-traitement des gaz d'échappement selon la revendication 5,
**caractérisé en ce que**
les cylindres donnant le flux dont la veine partielle des gaz d'échappement est prélevée, fonctionnent selon d'autres paramètres de moteur que les cylindres de l'autre flux.

7. Système de post-traitement des gaz d'échappement selon la revendication 6,
**caractérisé par**
deux turbocompresseurs de gaz d'échappement dont la turbine de l'un est alimentée en gaz d'échappement à partir du premier banc de cylindres du moteur à combustion interne et dont la turbine de l'autre est alimentée en gaz d'échappement à partir du second banc de cylindres du moteur à combustion interne, et
la veine partielle des gaz d'échappement, est dérivée de la veine des gaz d'échappement en amont de la turbine de l'un des deux turbocompresseurs de gaz d'échappement.

8. Système de post-traitement des gaz d'échappement selon la revendication 7,
**caractérisé en ce que**
le banc de cylindres avec la conduite des gaz d'échappement dont est dérivée une veine partielle de gaz d'échappement, fonctionne selon d'autres paramètres du moteur que l'autre banc de cylindres.

9. Système de post-traitement des gaz d'échappement selon les revendications précédentes,
**caractérisé par**
un élément d'étranglement installé dans la veine partielle des gaz d'échappement, cet élément d'étranglement étant commandé et/ou régulé en fonction de la vitesse spatiale des gaz d'échappement et/ou des quantités de gaz d'échappement dans la conduite de dérivation.

10. Système de post-traitement des gaz d'échappement selon les revendications précédentes,
**caractérisé par**
un clapet antiretour installé dans la conduite partielle des gaz d'échappement, en amont de la conduite d'alimentation fournissant l'agent réducteur.

11. Système de post-traitement des gaz d'échappement selon les revendications précédentes,
**caractérisé en ce qu'**
un élément d'arrêt, commandé ou régulé (12) est prévu en amont du point d'introduction de l'agent réducteur dans la veine partielle des gaz d'échappement.

12. Système de post-traitement des gaz d'échappement selon les revendications précédentes,
**caractérisé en ce qu'**
un catalyseur d'oxydation NH₃ (7, 7') est prévu en aval du catalyseur SCR (6, 6').

13. Système de post-traitement des gaz d'échappement selon les revendications précédentes,
**caractérisé en ce qu'**
on utilise du platine et/ou du palladium et/ou de l'iridium et/ou leurs oxydes et/ou IrTiOₓ et/ou des zéolithes comme composant actif du catalyseur d'oxydation (4, 4', 4", 4"', 16), pour transformer le monoxyde d'azote en oxydes d'azote et/ou pour le catalyseur d'oxydation NH₃ (7, 7') pour l'oxydation de l'ammoniac.

14. Système de post-traitement des gaz d'échappement selon les revendications précédentes,
**caractérisé en ce que**
pour réduire les oxydes d'azote à l'aide d'ammoniac, le catalyseur SCR (6, 6') comporte comme composants actifs, du vanadium et/ou du pentoxyde de vanadium et/ou du dioxyde de titane et/ou de l'oxyde de tungstène et/ou des zéolithes contenant du cuivre et/ou des zéolithes contenant du fer et/ou des zéolithes contenant du cobalt.

15. Système de post-traitement des gaz d'échappement selon les revendications 2 à 14,
**caractérisé en ce que**
pour libérer de l'ammoniac, le catalyseur d'hydrolyse (3, 3', 3") contient comme composants actifs, du dioxyde de titane et/ou du dioxyde de silicium et/ou de l'oxyde d'aluminium et/ou des zéolithes.

16. Système de post-traitement des gaz d'échappement selon les revendications précédentes,
**caractérisé en ce que**
la température des gaz d'échappement et/ou la teneur en dioxyde d'azote au niveau du séparateur de particules (5, 5') ou du filtre à particules se modifie(nt) par réglage des paramètres du moteur et/ou par relevage de la concentration en hydrocarbures à l'aide du réglage de paramètres du moteur et/ou par l'introduction d'hydrocarbures dans la veine des gaz d'échappement en amont du catalyseur d'oxydation (4, 4', 4", 4"', 16) pour oxyder le monoxyde d'azote.

17. Système de post-traitement des gaz d'échappement selon les revendications précédentes,
**caractérisé par**
plusieurs catalyseurs et/ou séparateurs de particules logés dans un boîtier commun.

18. Système de post-traitement des gaz d'échappement selon les revendications précédentes,
**caractérisé en ce que**
les filtres à particules et/ou les séparateurs de particules sont construits pour être interchangeables.
